# EUROPEAN PATENT SPECIFICATION

(11) **EP 1 031 220 B1**
(45) Date of publication and mention of the grant of the patent: **12.05.2004**
(21) Application number: 97909432.3
(22) Date of filing: 16.10.1997
(51) Int. Cl.: H04L 29/06, H04L 12/26

(54) **APPARATUS AND METHOD FOR CONTROLLING ACCESS TO A SERVICE OVER A COMMUNICATIONS SYSTEM**
VORRICHTUNGEN UND VERFAHREN ZUR ZUGRIFFSTEUERUNG ZU EINEM DIENST ÜBER EIN KOMMUNIKATIONSSYSTEM
APPAREILS ET PROCEDE DE COMMANDE D'ACCES A UN SERVICE VIA UN SYSTEME DE COMMUNICATION

(43) Date of publication of application: 30.08.2000
(60) Divisional application: 01125197.2
(73) Proprietor: Virtual Access Technology Limited, Dublin 2 (IE)
(72) Inventor: SLABY, John Virtual Access (UK) Limited, Ascot SL5 7PW (GB); LOUGHLIN, Thomas Virtual Access (Ireland) Limited, Dublin 2 (IE); BRANKIN, Henry Virtual Access (Ireland) Limited, Dublin 2 (IE)
(74) Representative: Collins, John David
(86) International application number: PCT/GB1997/002850
(87) International publication number: WO 1999/021336

(56) References cited:
- EP-A- 0 791 881
- EP-A- 0 793 170
- US-A- 5 557 748

## Description

The present invention generally relates to a method and apparatus for controlling access to a service over a communication system.

With the ever-increasing use of networks of computers there is an increasing need to simplify the setting up of a network and to more efficiently monitor the operation of the network.

One method by which computers can be networked over large distances is by using the telecommunications network. The prime example of this is the internet. The interconnections into the internet can either be via conventional analogue lines, via the integrated services digital network (ISDN) or via a permanent connection such as a leased line. An alternative network comprises the frame relay network that allows for high data transfers and requires a permanent connection.

A problem with interfacing to a communications network in order to access a service is that the interface apparatus must be configured for communication. Conventionally this is carried out manually requiring a user to either follow a series of steps, and/or to have some knowledge of networking.

EP-A-0793170 discloses a system and method for the automatic configuration of home computer networks in which a home computer connects over a network to an auto-configuration server to retrieve configuration data automatically. The computer automatically communicates with the auto-configuration server over a network to retrieve initial configuration data. Unique identification information is transmitted from the home computer to the auto-configuration server and this is used to determine the configuration data for the home computer. The determined configuration data is transmitted to the home computer where it is stored and used for controlling subsequent communications by the computer over the network.

EP-A-0791881 discloses a configuration manager for network devices in which initial configuration data for boot purposes is provided upon request from a configuration tool to network devices.

It is an object of the present invention to overcome the problem of configuring apparatus for accessing a service by providing an apparatus which can automatically configure itself and can be automatically and remotely configured.

The present invention provides a method of remotely configuring communication apparatus for communication over a network to access a service, the method comprising the steps of: connecting said communication apparatus to said network; said communication apparatus automatically communicating with a remote configuration system over said network using initial configuration data; said communication apparatus transmitting unique identification information to said configuration system; at said configuration system determining configuration data for said communication apparatus; transmitting said configuration data to said communication apparatus; storing said configuration data received from said configuration system in storage means in said communication apparatus; controlling subsequent communications by said communication apparatus over said network using the stored configuration data; characterized by: transmitting subsequent configuration data to said communication apparatus automatically from said configuration system; storing said subsequent configuration data in said storage means; and controlling subsequent communications by said communication apparatus over said network in accordance with the stored subsequent configuration data.

The present invention also provides communication apparatus for interfacing a computer system to a communication network to access a service, the apparatus comprising: first I/O means for connection to said computer system; second I/O means for connection to the communication network; storage means for storing unique identification information and configuration data for configuring the operation of the apparatus to access said service over said communication network; processing means for controlling said second I/O means when said second I/O means is connected to said communication network to connect to a remote configuration system and to transmit said unique identification information in said storage means to the configuration system; wherein said processing means is operable to control said second I/O means to receive initial configuration data from said configuration system, to store said received initial configuration data in said storage means, and to control access to said service by said computer system in accordance with said received initial configuration data; and wherein said processing means is operable to control said second I/O means to receive subsequent configuration data automatically generated by said configuration system, to store said subsequent configuration data in said storage means, and to control subsequent access to said service by said computer system in accordance with said subsequent configuration data.

The present invention also provides communication apparatus for communicating with a remote system over a network to access a service, the apparatus comprising: I/O means for connection to the network; storage means for storing unique identification information and configuration data for the operation of the communication apparatus to access said service; processing means for controlling said I/O means when said I/O means is connected to said network to connect to a remote configuration system for a first time and to transmit said unique identification information thereto; wherein said processing means is operable to control said I/O means to receive initial configuration data from said configuration system, to store said received initial configuration data in said storage means, and to control access to said service in accordance with said received initial configuration data; and characterized in that said processing means is operable to control said I/O means to receive subsequent configuration data automatically generated by said configuration system, to store said subsequent configuration data in said storage means, and to control subsequent access to said service in accordance with said subsequent configuration data.

The present invention further provides a configuration system for connection to said communication apparatus via a communication network, said configuration system comprising: I/O means for connection to said communication network, and for receiving said unique identification information from said communication apparatus; and configuration processing means responsive to said unique identification information to determine initial configuration data for said communication apparatus; wherein said I/O means is adapted to transmit said determined configuration data to said communication apparatus over said communications network; and characterized in that said configuration processing means is operative to automatically determine updated configuration data and to cause said I/O means to transmit said updated configuration data to said communication apparatus.

Thus this system removes the need for a user to have any knowledge of networking or to have to undergo any steps in configuring the apparatus to access a service. At the time of purchase, the user will subscribe to a service whereupon a third party responsible for configuring the apparatus remotely is given information on the user, the unique identifying information for the apparatus, and possibly the level and/or type of service required by the user. The third party can comprise the service provider or any third party delegated by a service provider to provide the configuration service. Using the information on the level and/or type of service required for the user, and the unique identifying information, configuration data can thus be generated at a remote configuration system ready to be downloaded to the apparatus when it is first connected. The apparatus will be pre-configured with data which instructs the apparatus to automatically connect to the remote configuration system when it is first connected in order to obtain the configuration data. In a telecommunications network for example the initially set configuration data can cause the apparatus to dial a telephone number which connects automatically to the remote configuration system. In a fixed network the configuration data could simply instruct the apparatus to make a connection to a particular address in the network.

The apparatus can be incorporated within a computer system to control the communications between the computer system and the service. Alternatively, the apparatus can comprise an interface between a computer system and a communications network. The computer system can comprise a single computer or a network of computers for example networked by a local area network.

The interconnection between the apparatus and the service can be made via any form of network. In one embodiment a communication connection made to the apparatus comprises at least one ISDN line. In such an arrangement a D channel can be used for permanent connection between the apparatus and the network whilst the B channels can be used as necessary for communications. In this way the D channel can allow for permanent monitoring of the apparatus by a remote system such as the service provider or some form of management system. The subsequent configuration data can be sent using the D channel at any time without the user having to make a connection using the B channels.

Embodiments of the present invention will now be described with reference to the accompanying drawings in which:
Figure 1 is a schematic drawing of a generalised system in accordance with an embodiment of the present invention;
Figure 2 is a schematic drawing of an arrangement using the frame relay network in accordance with an embodiment of the present invention;
Figure 3 is a schematic drawing of an arrangement using the internet in accordance with an embodiment of the present invention;
Figure 4 is a functional diagram of the apparatus in accordance with an embodiment of the present invention;
Figure 5 is a schematic drawing of the apparatus in accordance with an embodiment of the present invention; and
Figure 6 is a flow diagram illustrating the steps involved in configuring the apparatus in accordance with an embodiment of the present invention.

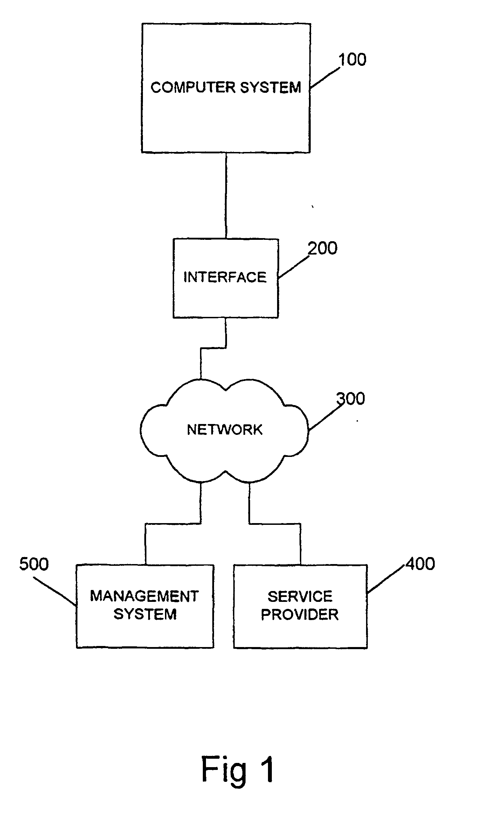

Referring now to Figure 1, this diagram illustrates a generalised system in accordance with an embodiment of the present invention wherein a computer system 100 is connected via an interface 200 to a network 300 in order to access a service 400. A management system 500 is provided connected to the network 300 in order to control access to the service and to provide configuration data for the interface 200 as required.

Although the computer system 100 and interface 200 are shown in Figure 1 separately, the interface 200 can be combined within the computer system 100.

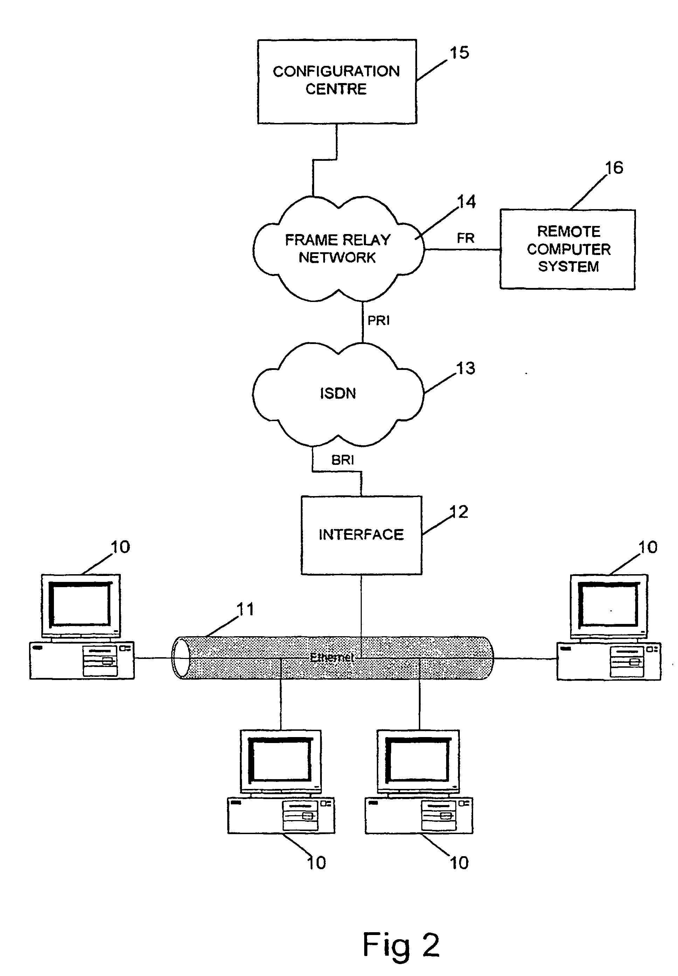

Figure 2 illustrates schematically a more specific embodiment of the present invention which utilises the frame relay network. In this embodiment computers 10 are networked over a local area network (LAN) (11) which is provided with an interface 12 which is connected to an ISDN network 13 via a basic rate ISDN (BRI) line. The ISDN network 13 is connected to the frame relay network via a primary rate ISDN (PRI) line. A remote computer system 16 is connected to the frame relay network 14 using the frame relay (FR) line and a configuration centre 15 is provided also connected to the frame relay network 14 for providing configuration data to the interface 12.

In this embodiment when the interface 12 is initially installed it is configured to dial into the frame relay network 14 via the ISDN network 13 in order to obtain configuration data from the configuration centre 15. The automatic configuration capability in this arrangement removes the necessity for the user of interface 12 to have any knowledge or understanding of the network to which the interface 12 is being connected. The interface 12 is initially configured (factory set) to connect to the configuration centre 15 which will have been provided with information on the service required by the user of the interface 12 and the unique serial number of the interface 12 e.g. at the point of purchase. In this way once the interface 12 has connected to the configuration centre 15, it will transmit its unique serial number whereupon the configuration centre 15 will determine e.g. look up the required configuration data for transmission back to the interface 12. Once the interface 12 has received the new configuration data, this can be used for all future communications in order to connect to the remote computer system 16. The re-configuring of the interface 12 can take place by a re-initialisation of the interface 12, by a reloading of the controlling software and configuration data, or simply by re-reading the configuration data.

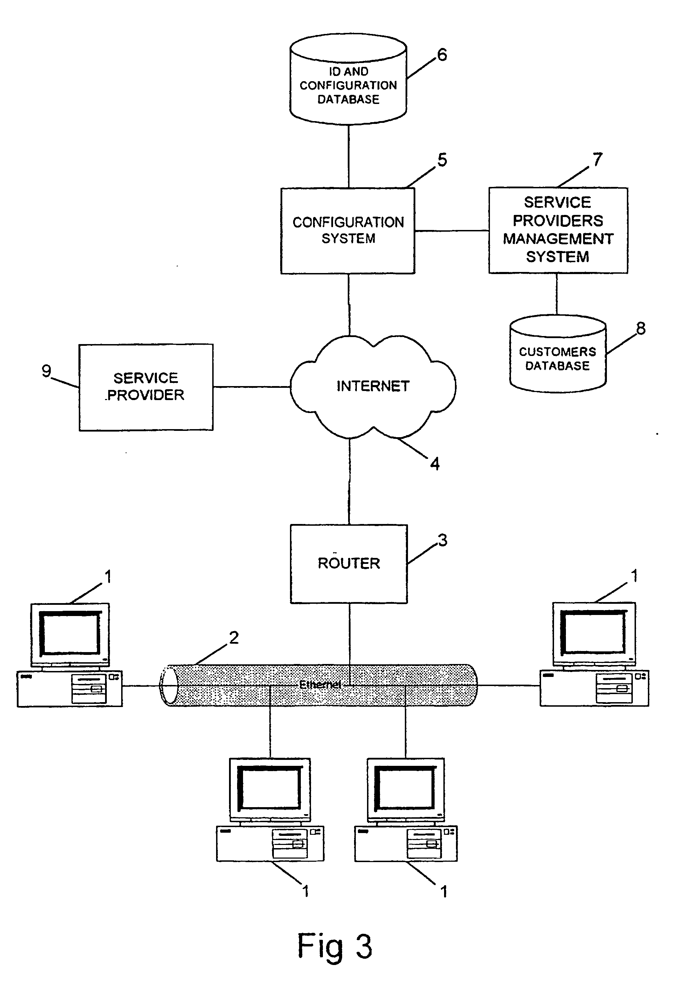

Figure 3 illustrates an alternative embodiment of the present invention wherein computers 1 are connected over a local area network which in this embodiment comprises an ethernet 2. A router 3 is connected to the ethernet 2 to interface the ethernet 2 to the internet 4. A service provider 9 is connected to the router 3 via the internet 4 and a configuration system 5 is also connected to the internet 4 and accessible to the router 3. The configuration system 5 is provided with a database 6 of configuration data for each router serial number. Also Figure 3 illustrates the presence of a service provider's management system 7 and a customer's database 8.

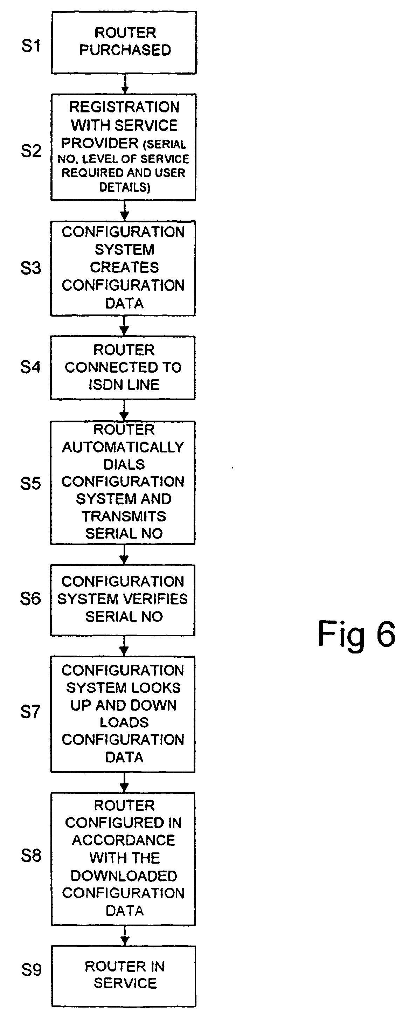

The operation of this system will now be described with reference to the flow diagram of Figure 6. When the router 3 is purchased or soon thereafter and before first connection to access the service, the user registers with the service provider. The registration takes the form of providing the service provider with the serial number of the router, details of the user, and possibly information which identifies the level or type of service required from the provider. Of course, where the provider only provides one level of service i.e. a simple connection, there is no need for this information since it is assumed that if the user is registering connection is required. Such information provided to the service provider is typically held in a customer database 8. The service provider's management system 7 will contain the customer details not just for the purposes of configuration, but also for general management purposes such as billing. The information can then be passed from the service provider's management system 7 into the configuration system 5 which can comprise a separate computer. Alternatively, the functions of the configuration system 5 and the service provider's management system 7 could be combined. With the information on the level and/or type of service required and the serial number of the router, the configuration system can then determine suitable configuration data and install this in the database 6. Of course, as new routers are purchased for use in accessing the service, this process of determining suitable configuration data will be repeated to build up the database 6.

When the router is connected to the internet via for example an ISDN line, the router automatically dials the configuration system and when the connection is made it transmits its unique serial number. The serial number can be encoded for security purposes before being transmitted. When the configuration system receives the serial number, if it is encoded it is decoded and it then goes through a verification process to determine whether it is a valid serial number. If validation is successful the configuration system refers to the database 6 to look up the appropriate configuration data which is then transmitted to the router 3 for storage in the local memory. The transmitted configuration data can be suitably encoded before transmission for security purposes. The connection by the router to the configuration system 5 can then be terminated and the router can then configure itself in accordance with the newly downloaded configuration data. This can be achieved by a re-initialisation of the router, a reloading of the control software and configuration data, or simply by re-reading the configuration data. Once this has been carried out, the router is now configured for future access to the service provided by the service provider 9 i.e. the configuration data has set up the router to dial the correct telephone number to be connected to the service provider, it has loaded a user name and password into the router for transmission to the service provider, and it has set up other connection parameters required for communication between the router and the service provider.

Since in Figure 3 the router 3 comprises a LAN access router, users of the computers 1 looking to access the services of the service provider 9 will be able to do so seamlessly via the router 3. None of the users of the computers or the network manager of the local network need carry out any steps in configuring the LAN access router initially. Also, it is possible for the configuration system 5 to amend or update the configuration data in the router 3 remotely without the need for the local users or local network manager to do anything. One reason for updating the configuration data may be that the connection parameters have changed e.g. the telephone number for the service provider is changed or the data rate. In such circumstances the configuration system 5 may automatically download new configuration data to the router 3 for subsequent use. Alternatively, where a service provider 3 provides different levels of service or possibly even a different service provider is required by the user of the router 3, the user will have contacted the service provider requesting a new or updated level of service. This will of course result in new or updated configuration data in the database 6 which will be automatically downloaded to the router 3. It may also be possible for the user of the router 3 i.e. the local network management to make an online request for updated configuration data.

In this embodiment the connection between the network 4 and the router 3 can be via any form of convenient communication line e.g. a conventional analogue line, an ISDN line, or a permanent communication line. If the communication line is analogue, of course the router will include a modem. where an ISDN line is available, this will provide a high data rate without the cost of a permanent line. Also, since an ISDN line includes a data (D) channel which can be permanently open for communications of data, the configuration system 5 can use the D channel for downloading configuration data to the router 3.

The configuration system 5 can comprise a workstation running a configuration setup application. The database 6 can be provided within the workstation using any suitable database software such as Microsoft's SQL database software. In order to provide a convenient interface to the user the server can run Microsoft's Internet Infoserver to provide a web interface. The workstation will also operate as a file transfer protocol (FTP) server for the transfer of the configuration data to the router 3.

Although in Figure 3 the configuration system 5 is illustrated as being directly connected to the internet 4, the workstation may be connected to a LAN which has a router connected thereto. Any method of connecting the configuration system 5 to the internet can be used which allows for the router 3 to connect directly into it to obtain configuration data. Thus, although the configuration system 5 is most likely to be operated by the service provider, it need not be and can be operated by a third party.

In the configuration system, in order to form the configuration data there are three levels of configurations to be considered and these are (1) configuration parameters for the hardware of the router, (2) configuration parameters specific to the provider's service and (3) parameters specific to the requirements of the user. In the specific embodiment the Microsoft Internet Information server acts as interface between the operator of the system and the Microsoft SQL database to allow for the parameters to be entered into the database to form the configuration data.

Although Figure 3 illustrates that the router 3 has only one communication line to the internet, it may have a number of communication lines for simultaneous communication to a number of service providers and possibly to a number of configuration systems. Thus, the router 3 will be capable of storing within its memory a configuration file for each communication line which communicates to a service provider. Further, the router may not be limited to a single service provider and thus more than one set of configuration data may be provided (or a set of configuration data with options for different service providers) can be stored within its memory and the router may enable a user to select the service provider to be accessed.

Although Figure 3 illustrates the router as interfacing a local area network to the internet, the router 3 may in fact comprise a simple interface between a single computer system and the internet.

In a conventional network arrangement when a service provider provides a service over the internet to a user, it gathers statistics (i.e. information on events caused by access made by the user) and processes this raw statistical data into more useful summary data. This conventional method of gathering statistical information requires the service provider to continuously retrieve data from the user which stores the raw gathered statistics locally. If a user required summary information it was necessary previously to request this information from the service provider who would then download it to the user. In this embodiment the limitations of the prior art are overcome by providing for local processing of the gathered statistics so that this information can be made available locally and can be periodically uploaded to the service provider. Thus, the amount of information which needs to be passed up to the service provider is reduced, the processing load of the service provider is reduced, and processed statistics are readily available to the user.

In an embodiment of the present invention a manager of the router 3 such as a local area network manager is provided with a user interface which can comprise a web server allowing any one of the computers 1 to enter a URL to access a web page which will display the processed statistics. The processed statistics available to the user can be processed in accordance with machine independent code which conveniently comprises a Java applet. In addition to this method of interfacing using the local area network 2, the router 3 can be provided with a serial interface to allow local management e.g. the entry of configuration data or to obtain statistics.

In the router a log file is formed in memory which records each communication event and parameters of each event. These parameters can be accessed locally via the user interface and are processed to form summary information which is also available locally via the user interface. The processed statistics will periodically be transmitted to the service provider. The statistics can comprise the number of bytes transmitted and received, the number of frames transmitted and received, the number of errors, and the number of calls made. The configuration file which is remotely downloaded and includes parameters specific to the service provider, will determine how often the raw statistical data is captured, what raw statistical data should be captured, and how many samples are to be kept. The number of variables and number of samples to be kept are limited by the memory capacity of the router 3 and this will be taken into consideration by the configuration system during the formation of the configuration data since it will have all the information necessary to form the appropriate configuration data.

The statistical processing is carried out by capturing events and synchronising these events with the operation of a real time clock. This generates a table of raw statistical data. When the table of raw statistical data is full, the data is processed in accordance with the configuration data to form summary data in a summary table. It is this summary data in the summary table which can be viewed by the user interface and the type of user interface can be determined by the configuration data.

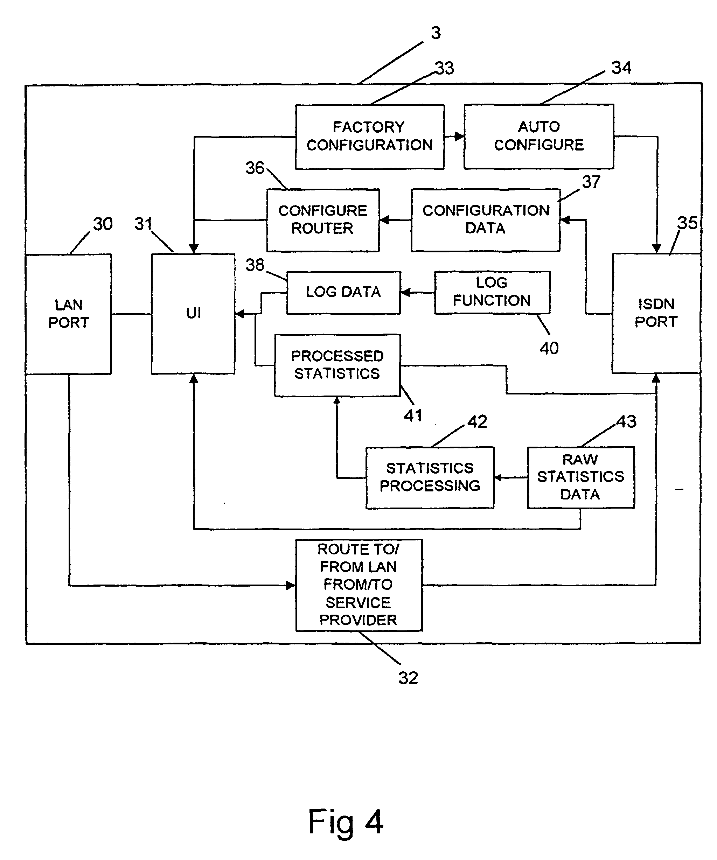

Referring now to Figure 4, there is illustrated a functional diagram of the router 3. A LAN port 30 interfaces the router 3 to the LAN. A router 32 is provided for communications which are to be routed to/from the LAN from/to the service provider and an ISDN port 35 is provided for interface to the telecommunications network. A factory configuration 33 is initially set within the router which initiates an auto-configuration process 34 which causes the router to dial the remote configuration system and transmit its unique serial number. Configuration data 37 is thus received a process 36 for configuring the router configures it for future communications. For all future communications a log function 40 logs communication events to form log data 38. This forms part of the raw statistical data 43 which is processed by a statistics processing procedure 42 to generate processed statistics 41. A user interface 31 provides access for a user to the raw statistical data, the log data, and the processed statistics. The type of user interface is initially dependent upon the factory configuration and subsequently to the downloaded configuration data. The processed statistics 41 is not only available to the user interface 31, it is also available via the ISDN port 35 to the service provider.

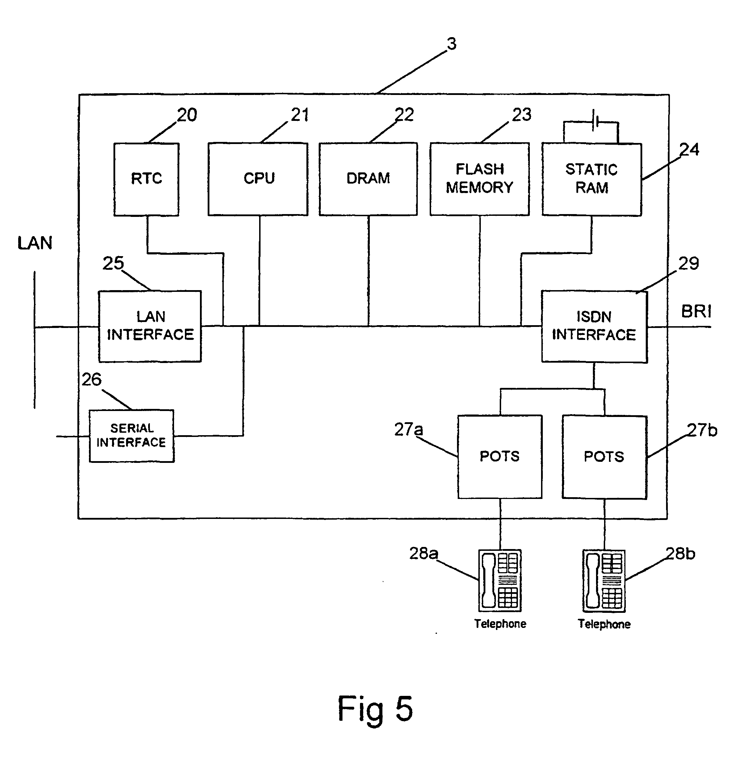

Figure 5 illustrates schematically the structure of the router 3 in accordance with an embodiment of the present invention. A LAN interface is provided for connection to a LAN. The interface provides a network manager with access to the raw and processed statistical data and also allows for users to access the service provided by the service provider. A serial interface 26 is also provided for management and allows a manager to access not only the raw and processed statistical data but also the configuration data.

A real time clock 20 is provided for timing the recordal of events to form the statistical data for processing by the central processing unit 21. A dynamic random access memory 22 is also provided to act as the working memory.

Flash memory is provided for storing the programs for carrying out the configuration of the router, for carrying out the statistical processing, for routing the communications and for providing the user interface. Also the configuration data is stored in the flash memory 23. This can comprise the initial factory configuration data and one or more sets of subsequently downloaded configuration data. Also, the serial number is stored in the flash memory 23. A battery-backed static RAM 24 is also provided for storing the statistical data such as the event log and the call log. An ISDN interface 29 is provided for interfacing to a basic rate ISDN (BRI) line and two plain old telephone service (POTS) interfaces 27a, 27b provide two analogue telephone lines (one for each of the two B channels of the BRI line) for use by telephones 28a and 28b.

Although the present invention has been described hereinabove with reference to specific embodiments, the present invention is not limited to such embodiments and variations will be apparent to a skilled person in the art. For example, although the interface to a computer system has been described with reference to a LAN interface, any interface can be used e.g. a serial interface such as an RS232 interface or a USB (universal serial bus). Further, more than one interface can be provided both to the computer system and to communication lines. The communication lines can be any form of network communication lines such as a permanent leased line, an ISDN line, or a simple analogue line. Also, different services may be available for users on different communication lines provided for by different communication data for those lines.

## Claims

1. A method of remotely configuring communication apparatus (100) for communication over a network (300) to access a service, the method comprising the steps of:
connecting said communication apparatus (100) to said network (300);
said communication apparatus (100) automatically communicating with a remote configuration system (500) over said network (300) using initial configuration data;
said communication apparatus (100) transmitting unique identification information to said configuration system (500);
at said configuration system (500) determining configuration data for said communication apparatus (100);
transmitting said configuration data to said communication apparatus (100);
storing said configuration data received from said configuration system (500) in storage means (22) in said communication apparatus (100);
controlling subsequent communications by said communication apparatus (100) over said network (300) using the stored configuration data;
**characterized by**:
transmitting subsequent configuration data to said communication apparatus (100) automatically from said configuration system (500);
storing said subsequent configuration data in said storage means (22); and
controlling subsequent communications by said communication apparatus (100) over said network (300) in accordance with the stored subsequent configuration data.

2. A method according to claim 1, including the steps of a user of said communication apparatus (100) generating a request for further subsequent configuration data, and transmitting said request to said configuration system (500) to initiate the transmission of subsequent configuration data.

3. A method according to claim 1 or claim 2, wherein said configuration data is transmitted over said network (300) using a permanently open control channel associated with a plurality of data/voice channels.

4. A method according to any one of claims 1 to 3, including the steps at said communication apparatus (100), of:
gathering information on the use of said service;
processing said information to generate summary information; and
periodically transmitting said summary information to a provider of said service.

5. A method according to claim 4, wherein said information is gathered in real time using a real time clock (20).

6. A method according to claim 4 or claim 5, including the step of supplying said information and/or said summary information to a user.

7. Communication apparatus (200) for use in the method of claim 1 for interfacing a computer system (100) to a communication network (300) to access a service, the apparatus (200) comprising:
first I/O means (25) for connection to said computer system;
second I/O means (29) for connection to the communication network;
storage means (22) for storing unique identification information and configuration data for configuring the operation of the apparatus to access said service over said communication network (300);
processing means (21) for controlling said second I/O means (29) when said second I/O means (29) is connected to said communication network (300) to connect to a remote configuration system (500) and to transmit said unique identification information in said storage means (22) to the configuration system (500);
wherein said processing means (21) is operable to control said second I/O means (29) to receive initial configuration data from said configuration system (500), to store said received initial configuration data in said storage means (22), and to control access to said service by said computer system (100) in accordance with said received initial configuration data; and
wherein said processing means (21) is operable to control said second I/O means (29) to receive subsequent configuration data automatically generated by said configuration system (500), to store said subsequent configuration data in said storage means (22), and to control subsequent access to said service by said computer system (100) in accordance with said subsequent configuration data.

8. Communication apparatus according to claim 7, wherein said first I/O means (25) comprises a local area network port for connection to a local area network.

9. Communication apparatus according to claim 7 or claim 8, wherein said second I/O means (29) comprises an ISDN port for connection to one or more ISDN lines in said communications network (300).

10. Communication apparatus according to claim 9, wherein said second I/O means (29) is adapted for connection to an ISDN line having a data channel (D) and a plurality of bearer channels (B).

11. Communication apparatus according to claim 9 or claim 10, including at least one plain old telephone service (POTS) interface (27a, 27b) for connecting a telephone (28a, 28b) to the or each ISDN line.

12. Communication apparatus according to any one of claims 7 to 11, including user interface means (31) for allowing a user to generate a request for further subsequent configuration data, said processing means (21) being responsive to said request to control said second I/O means (29) to transmit said request to said configuration system (500) to cause further subsequent configuration data to be transmitted to said apparatus (200).

13. Communication apparatus according to any one of claims 7 to 12, wherein said second I/O means (29) comprises an ISDN interface for connection to one or more ISDN lines of an ISDN network having one or more data channels permanently connecting said ISDN interface to the ISDN network, and for receiving said subsequent configuration data using said data channel.

14. Communication apparatus according to claim 13, wherein said ISDN interface is adapted to receive said subsequent configuration data using one or more communication channels of the or each ISDN line.

15. Communication apparatus according to claim 7 or claim 8, wherein said second I/O means (29) is adapted for connection to a dedicated data communication line.

16. Communication apparatus according to any one of claims 7 to 15, wherein said processing means (21) is operable to gather information on the use of said service by said computer system (100), to process said information to generate summary information, and to control said second I/O means (29) to periodically transmit said summary information to a provider of said service.

17. Communication apparatus according to claim 16, including real time clock means (20), wherein said processing means (21) is operable to use said real time clock means (20) to gather real time information on the use of said service by said computer system (100).

18. Communication apparatus according to claim 16 or claim 17, including user interface means (31) to allow a user of said communication apparatus (200) access to said information.

19. Communication apparatus according to claim 18, wherein said user interface means (31) comprises a further I/O means (26).

20. Communication apparatus according to claim 18, wherein said user interface means (31) comprises a computer program running on said processing means (21) to allow a user of said computer system (100) access to said summary information via said first I/O means (25).

21. Communication apparatus according to claim 20, wherein said user interface means (31) comprises said processor means (21) operating as a web server.

22. Communication apparatus according to claim 21, wherein said processing means (21) is operable to gather and process said information using machine independent instructions for output to said user.

23. Communication apparatus according to any one of claims 7 to 22, including encoding means for encoding said unique identification information before transmission by said second I/O means.

24. Communication apparatus according to any one of claims 7 to 23, including decoding means for decoding said initial and subsequent configuration data received in encoded form by said second I/O means.

25. Communication apparatus according to claim 7 or claim 8, wherein said second I/O means (29) includes a modem for connection to an analogue telephone line.

26. Communication apparatus (100, 200) for use in the method of claim 1 for communicating with a remote system (400) over a network (300) to access a service, the apparatus comprising:
I/O means (29) for connection to the network (300);
storage means (22) for storing unique identification information and configuration data for the operation of the communication apparatus to access said service;
processing means (21) for controlling said I/O means (29) when said I/O means (29) is connected to said network (300) to connect to a remote configuration system (500) for a first time and to transmit said unique identification information thereto;
wherein said processing means (21) is operable to control said I/O means (29) to receive initial configuration data from said configuration system (500), to store said received initial configuration data in said storage means (22), and to control access to said service in accordance with said received initial configuration data; and
**characterized in that** said processing means (21) is operable to control said I/O means (29) to receive subsequent configuration data automatically generated by said configuration system (500), to store said subsequent configuration data in said storage means (22), and to control subsequent access to said service in accordance with said subsequent configuration data.

27. Communication apparatus according to claim 26, including user interface means (25) for allowing a user to generate a request for further subsequent configuration data, said processing means (21) being responsive to said request to control said I/O means (29) to transmit said request to said configuration system (500) to cause further subsequent configuration data to be transmitted to said apparatus (100, 200).

28. Communication apparatus according to claim 26, wherein said I/O means (29) comprises an ISDN interface for connection to one or more ISDN lines of an ISDN network having one or more data channels permanently connecting said ISDN interface to the ISDN network, and for receiving said subsequent configuration data using said data channel.

29. Communication apparatus according to claim 28, wherein said ISDN interface is adapted to receive said subsequent configuration data using one or more communication channels of the or each ISDN line.

30. Communication apparatus according to any one of claims 26 to 29, wherein said processing means (21) is operable to gather information on the use of said service, to process said information to generate summary information, and to control said I/O means (29) to periodically transmit said summary information to a provider of said service.

31. Communication apparatus according to claim 30, including real time clock means (20), wherein said processing means (21) is operable to use said real time clock means (20) to gather real time information on the use of said service.

32. Communication apparatus according to claim 30 or claim 31, including user interface means to allow a user of said apparatus access to said information.

33. Apparatus according to claim 32, wherein said user interface means comprises a computer program running on said processing means (21) to allow access to said summary information.

34. Apparatus according to claim 33, wherein said processing means (21) is operable to gather and process said information using machine independent instructions for output to said user.

35. Apparatus according to any one of claims 26 to 34, including encoding means for encoding said unique identification information before transmission by said I/O means (29).

36. Apparatus according to any one of claims 26 to 35, including decoding means for decoding configurating received in encoded form by said I/O means (29).

37. A configuration system (500) for use in the method of claim 1 and for connection to said communication apparatus (200) according to any one of claims 7 to 36 via a communication network (300), said configuration system (500) comprising:
I/O means for connection to said communication network (300), and for receiving said unique identification information from said communication apparatus (200); and
configuration processing means responsive to said unique identification information to determine initial configuration data for said communication apparatus;
wherein said I/O means is adapted to transmit said determined configuration data to said communication apparatus (200) over said communications network (300); and
**characterized in that** said configuration processing means is operative to automatically determine updated configuration data and to cause said I/O means to transmit said updated configuration data to said communication apparatus (200).

38. A configuration system according to claim 37, wherein said configuration processing means is operative to determine said configuration data using said unique identification information, information on the user or users of said communication apparatus, and information on the level of service required by the user or users.

39. A configuration system according to claim 38, including obtaining means for obtaining said information on the user or users, and said information on the level of service required by the user or users.

40. A configuration system according to claim 39, wherein said obtaining means is adapted to obtain said information on the user or users, said information on the level of service required by the user or users, and expected unique identification information prior to receipt of said unique identification information by said I/O means, and said configuration processing means is operative to determine said configuration data before receipt of said unique identification information using the information obtained by said obtaining means, to compare the received unique identification information with said expected unique identification, and to cause said I/O means to transmit the configuration data if there is a match in the comparison.

41. A configuration system according to claim 40, including means for storing a plurality of sets of said configuration data for a corresponding plurality of said expected unique identification information for a corresponding plurality of said communication apparatuses, wherein said configuration system (500) is capable of connecting to a plurality of said communication apparatuses (200).

42. A configuration system according to any one of claims 37 to 41, wherein said configuration processing means is responsive to a request for configuration data received by said I/O means from said communication apparatus (200) to determine configuration data and control said I/O means to transmit said determined configuration data.

43. A configuration system according to any one of claims 37 to 42, including decoding means for decoding encoded unique identification information received from said communication apparatus (200).

44. A configuration system according to any one of claims 41 to 43, including encoding means for encoding said configuration data for transmission to said communication apparatus (200).

## Patentansprüche

1. Verfahren zum Fernkonfigurieren von Kommunikationsvorrichtungen (100) für die Kommunikation über ein Netzwerk (300) zum Zugreifen auf einen Dienst, wobei das Verfahren die folgenden Schritte umfasst:
Verbinden der Kommunikationsvorrichtungen (100) mit dem Netzwerk (300);
wobei die Kommunikationsvorrichtungen (100) unter Verwendung anfänglicher Konfigurationsdaten mit einem Fernkonfigurationssystem (500) automatisch über das Netzwerk (300) kommunizieren;
wobei die Kommunikationsvorrichtungen (100) eindeutige Identifikationsinformationen zu dem Konfigurationssystem (500) senden;
an dem Konfigurationssystem (500) Ermitteln von Konfigurationsdaten für die Kommunikationsvorrichtungen (100);
Senden der Konfigurationsdaten zu den Kommunikationsvorrichtungen (100);
Speichern der von dem Konfigurationssystem (500) empfangenen Konfigurationsdaten in Speichermitteln (22) in den Kommunikationsvorrichtungen (100);
Steuern von nachfolgenden Kommunikationen durch die Kommunikationsvorrichtungen (100) über das Netzwerk (300) unter Verwendung der gespeicherten Konfigurationsdaten;
**gekennzeichnet durch**:
automatisches Senden von nachfolgenden Konfigurationsdaten von dem Konfigurationssystem (500) zu den Kommunikationsvorrichtungen (100);
Speichern der nachfolgenden Konfigurationsdaten in den Speichermitteln (22); und
Steuern von nachfolgenden Kommunikationen **durch** die Kommunikationsvorrichtungen (100) über das Netzwerk (300) gemäß den gespeicherten nachfolgenden Konfigurationsdaten.

2. Verfahren nach Anspruch 1, das die folgenden Schritte umfasst:
Erzeugen einer Anforderung weiterer nachfolgender Konfigurationsdaten durch einen Benutzer der Kommunikationsvorrichtungen (100) und Senden dieser Anforderung zu dem Konfigurationssystem (500), um die Übertragung nachfolgender Konfigurationsdaten einzuleiten.

3. Verfahren nach Anspruch 1 oder Anspruch 2, wobei die Konfigurationsdaten unter Verwendung eines permanent offenen Steuerkanals über das Netzwerk (300) gesendet werden, der mit einer Mehrzahl von Daten-/Sprachkanälen assoziiert ist.

4. Verfahren nach einem der Ansprüche 1 bis 3, einschließlich der folgenden Schritte an den Kommunikationsvorrichtungen (100):
Sammeln von Informationen über den Gebrauch des genannten Dienstes;
Verarbeiten der Informationen zum Erzeugen von Zusammenfassungsinformationen; und
periodisches Übertragen der Zusammenfassungsinformationen zu einem Anbieter des Dienstes.

5. Verfahren nach Anspruch 4, wobei die Informationen in Echtzeit unter Verwendung einer Echtzeituhr (20) gesammelt werden.

6. Verfahren nach Anspruch 4 oder Anspruch 5, das den Schritt des Zuführens der genannten Informationen und/oder Zusammenfassungsinformationen zu einem Benutzer beinhaltet.

7. Kommunikationsvorrichtung (200) für die Verwendung in dem Verfahren nach Anspruch 1, um ein Computersystem (100) mit einem Kommunikationsnetzwerk (300) zum Zugreifen auf einen Dienst zu verbinden, wobei die Vorrichtung (200) Folgendes umfasst:
erste E/A-Mittel (25) für den Anschluss an das Computersystem;
zweite E/A-Mittel (29) für den Anschluss an das Kommunikationsnetzwerk;
Speichermittel (22) zum Speichern von eindeutigen Identifikationsinformationen und Konfigurationsdaten zum Konfigurieren des Betriebs der Vorrichtung, um über das Kommunikationsnetzwerk (300) auf den Dienst zuzugreifen;
Verarbeitungsmittel (21) zum Steuern des zweiten E/A-Mittels (29), wenn das zweite E/A-Mittel (29) mit dem Kommunikationsnetzwerk (300) verbunden ist, um an ein Femkonfigurationssystem (500) anzuschließen und die eindeutigen Identifikationsinformationen in dem Speichermittel (22) zu dem Konfigurationssystem (500) zu senden;
wobei das Verarbeitungsmittel (21) die Aufgabe hat, das zweite E/A-Mittel (29) zum Empfangen von anfänglichen Konfigurationsdaten von dem Konfigurationssystem (500) zu steuern, die empfangenen anfänglichen Konfigurationsdaten in dem Speichermittel (22) zu speichern und den Zugriff auf den Dienst durch das Computersystem (100) gemäß den empfangenen anfänglichen Konfigurationsdaten zu steuern; und
wobei das Verarbeitungsmittel (21) die Aufgabe hat, das zweite E/A-Mittel (29) zum Empfangen von nachfolgenden Konfigurationsdaten zu steuern, die automatisch von dem Konfigurationssystem (500) erzeugt werden, um die nachfolgenden Konfigurationsdaten in dem Speichermittel (22) zu speichern und um einen nachfolgenden Zugriff auf den Dienst durch das Computersystem (100) gemäß den nachfolgenden Konfigurationsdaten zu steuern.

8. Kommunikationsvorrichtung nach Anspruch 7, wobei das erste E/A-Mittel (25) einen lokalen Netzwerkport für den Anschluss an ein lokales Netzwerk umfasst.

9. Kommunikationsvorrichtung nach Anspruch 7 und Anspruch 8, wobei das zweite E/A-Mittel (29) einen ISDN-Port für den Anschluss an eine oder mehrere ISDN-Leitungen in dem Kommunikationsnetzwerk (300) umfasst.

10. Kommunikationsvorrichtung nach Anspruch 9, wobei das zweite E/A-Mittel (29) für den Anschluss an eine ISDN-Leitung mit einem Datenkanal (D) und einer Mehrzahl von Trägerkanälen (B) gestaltet ist.

11. Kommunikationsvorrichtung nach Anspruch 9 oder Anspruch 10 mit wenigstens einer POTS- (Plain Old Telephone Service = einfacher Fernsprechdienst) Schnittstelle (27a, 27b) zum Anschließen eines Telefons (28a, 28b) an die oder jede ISDN-Leitung beinhaltet.

12. Kommunikationsvorrichtung nach einem der Ansprüche 7 bis 11 mit einer Benutzeroberfläche (31), die es zulässt, dass ein Benutzer eine Anforderung weiterer nachfolgender Konfigurationsdaten erzeugt, wobei das Verarbeitungsmittel (21) auf die Anforderung reagiert, indem es das zweite E/A-Mittel (29) so steuert, dass es die Anforderung zu dem Konfigurationssystem (500) sendet, um zu bewirken, dass weitere nachfolgende Konfigurationsdaten zu der Vorrichtung (200) gesendet werden.

13. Kommunikationsvorrichtung nach einem der Ansprüche 7 bis 12, wobei das zweite E/A-Mittel (29) eine ISDN-Schnittstelle für den Anschluss an eine oder mehrere ISDN-Leitungen eines ISDN-Netzwerks umfasst, bei dem ein oder mehrere Datenkanäle die ISDN-Schnittstelle permanent mit dem ISDN-Netzwerk verbindet/verbinden, und um die nachfolgenden Konfigurationsdaten über den genannten Datenkanal zu empfangen.

14. Kommunikationsvorrichtung nach Anspruch 13, wobei die ISDN-Schnittstelle so gestaltet ist, dass sie die nachfolgenden Konfigurationsdaten über einen oder mehrere Kommunikationskanäle der oder jeder ISDN-Leitung empfängt.

15. Kommunikationsvorrichtung nach Anspruch 7 oder Anspruch 8, wobei das zweite E/A-Mittel (29) für den Anschluss an eine dedizierte Datenkommunikationsleitung gestaltet ist.

16. Kommunikationsvorrichtung nach einem der Ansprüche 7 bis 15, wobei das Verarbeitungsmittel (21) die Aufgabe hat, Informationen über den Gebrauch des Dienstes durch das Computersystem (100) zu sammeln, um die Informationen zum Erzeugen von Zusammenfassungsinformationen zu verarbeiten und um das zweite E/A-Mittel (29) so zu steuern, dass es periodisch die Zusammenfassungsinformationen zu einem Anbieter des Dienstes sendet.

17. Kommunikationsvorrichtung nach Anspruch 16 mit einer Echtzeituhr (20), wobei das Verarbeitungsmittel (21) die Aufgabe hat, die Echtzeituhr (20) zum Sammeln von Echtzeitinformationen über den Gebrauch des Dienstes durch das Computersystem (100) zu benutzen.

18. Kommunikationsvorrichtung nach Anspruch 16 oder Anspruch 17 mit einer Benutzeroberfläche (31), die es zulässt, dass ein Benutzer der Kommunikationsvorrichtung (200) auf die Informationen zugreift.

19. Kommunikationsvorrichtung nach Anspruch 18, wobei die Benutzeroberfläche (31) ein weiteres E/A-Mittel (26) umfasst.

20. Kommunikationsvorrichtung nach Anspruch 18, wobei die Benutzeroberfläche (31) ein Computerprogramm umfasst, das auf dem Verarbeitungsmittel (21) läuft, um es zuzulassen, dass ein Benutzer des Computersystems (100) über das erste E/A-Mittel (25) auf die Zusammenfassungsinformationen zugreift.

21. Kommunikationsvorrichtung nach Anspruch 20, wobei die Benutzeroberfläche (31) das Verarbeitungsmittel (21) umfasst, das als Web-Server arbeitet.

22. Kommunikationsvorrichtung nach Anspruch 21, wobei das Verarbeitungsmittel (21) die Aufgabe hat, die Informationen mit maschinenunabhängigen Anweisungen für die Ausgabe zu dem Benutzer zu sammeln und zu verarbeiten.

23. Kommunikationsvorrichtung nach einem der Ansprüche 7 bis 22 mit Codiermitteln zum Codieren der eindeutigen Identifikationsinformationen vor der Übertragung durch das zweite E/A-Mittel.

24. Kommunikationsvorrichtung nach einem der Ansprüche 7 bis 23 mit Decodiermitteln zum Decodieren der anfänglichen und nachfolgenden Konfigurationsdaten, die in codierter Form von dem zweiten E/A-Mittel erhalten wurden.

25. Kommunikationsvorrichtung nach Anspruch 7 oder Anspruch 8, wobei das zweite E/A-Mittel (29) ein Modem für den Anschluss an eine analoge Telefonleitung beinhaltet.

26. Kommunikationsvorrichtung (100, 200) für den Einsatz in dem Verfahren nach Anspruch 1 zum Kommunizieren mit einem Fernsystem (400) über ein Netzwerk (300) zum Zugreifen auf einen Dienst, wobei die Vorrichtung Folgendes umfasst:
E/A-Mittel (29) für den Anschluss an das Netzwerk (300);
Speichermittel (22) zum Speichern von eindeutigen Identifikationsinformationen und Konfigurationsdaten für den Betrieb der Kommunikationsvorrichtung, um auf den Dienst zuzugreifen;
Verarbeitungsmittel (21) zum Steuern des E/A-Mittels (29), wenn das E/A-Mittel (29) mit dem Netzwerk (300) verbunden ist, um zum ersten Mal an ein Fernkonfigurationssystem (500) anzuschließen und die eindeutigen Identifikationsinformationen zu diesem zu senden;
wobei das Verarbeitungsmittel (21) die Aufgabe hat, das zweite E/A-Mittel (29) zum Empfangen von anfänglichen Konfigurationsdaten von dem Konfigurationssystem (500) zu steuern, die empfangenen anfänglichen Konfigurationsdaten in dem Speichermittel (22) zu speichern und den Zugriff auf den Dienst gemäß den empfangenen anfänglichen Konfigurationsdaten zu steuern; und
**dadurch gekennzeichnet, dass** das Verarbeitungsmittel (21) die Aufgabe hat, das zweite E/A-Mittel (29) zum Empfangen von nachfolgenden Konfigurationsdaten zu steuern, die automatisch von dem Konfigurationssystem (500) erzeugt werden, um die nachfolgenden Konfigurationsdaten in dem Speichermittel (22) zu speichern und um einen nachfolgenden Zugriff auf den Dienst gemäß den nachfolgenden Konfigurationsdaten zu steuern.

27. Kommunikationsvorrichtung nach Anspruch 26 mit einer Benutzeroberfläche (25), die es zulässt, dass ein Benutzer eine Anforderung weiterer nachfolgender Konfigurationsdaten erzeugt, wobei das Verarbeitungsmittel (21) auf die genannte Anforderung reagiert, indem es das E/A-Mittel (29) so steuert, dass es die Anforderung zu dem Konfigurationssystem (500) sendet, um zu bewirken, dass weitere nachfolgende Konfigurationsdaten zu der Vorrichtung (100, 200) gesendet werden.

28. Kommunikationsvorrichtung nach Anspruch 26, wobei das E/A-Mittel (29) eine ISDN-Schnittstelle für den Anschluss an eine oder mehrere ISDN-Leitungen eines ISDN-Netzwerks umfasst, bei dem ein oder mehrere Datenkanäle die ISDN-Schnittstelle permanent mit dem ISDN-Netzwerk verbindet/verbinden, und um die nachfolgenden Konfigurationsdaten über den genannten Datenkanal zu empfangen.

29. Kommunikationsvorrichtung nach Anspruch 28, wobei die ISDN-Schnittstelle so gestaltet ist, dass sie die nachfolgenden Konfigurationsdaten über einen oder mehrere Kommunikationskanäle der oder jeder ISDN-Leitung empfängt.

30. Kommunikationsvorrichtung nach einem der Ansprüche 26 bis 29, wobei das Verarbeitungsmittel (21) die Aufgabe hat, Informationen über den Gebrauch des Dienstes zu sammeln, um die Informationen zum Erzeugen von Zusammenfassungsinformationen zu verarbeiten und um das E/A-Mittel (29) so zu steuern, dass es die Zusammenfassungsinformationen periodisch zu einem Anbieter des Dienstes sendet.

31. Kommunikationsvorrichtung nach Anspruch 30 mit einer Echtzeituhr (20), wobei das Verarbeitungsmittel (21) die Aufgabe hat, die Echtzeituhr (20) zum Sammeln von Echtzeitinformationen über den Gebrauch des Dienstes zu benutzen.

32. Kommunikationsvorrichtung nach Anspruch 30 oder Anspruch 31 mit einer Benutzeroberfläche, um es zuzulassen, dass ein Benutzer der Vorrichtung auf die Informationen zugreift.

33. Vorrichtung nach Anspruch 32, wobei die Benutzeroberfläche ein Computerprogramm umfasst, das auf dem Verarbeitungsmittel (21) läuft, um den Zugriff auf die Zusammenfassungsinformationen zuzulassen.

34. Vorrichtung nach Anspruch 33, wobei das Verarbeitungsmittel (21) die Aufgabe hat, die Informationen mit maschinenunabhängigen Anweisungen für die Ausgabe zu dem Benutzer zu sammeln und zu verarbeiten.

35. Vorrichtung nach einem der Ansprüche 26 bis 34 mit einem Codiermittel zum Codieren der eindeutigen Identifikationsinformationen vor der Übertragung durch das E/A-Mittel (29).

36. Vorrichtung nach einem der Ansprüche 26 bis 35 mit einem Decodiermittel zum Decodieren von einer Konfiguration, die in codierter Form von dem E/A-Mittel (29) empfangen wurde.

37. Konfigurationssystem (500) für den Einsatz in dem Verfahren von Anspruch 1 und für den Anschluss an die Kommunikationsvorrichtung (200) nach einem der Ansprüche 7 bis 36 über ein Kommunikationsnetzwerk (300), wobei das Konfigurationssystem (500) Folgendes umfasst:
E/A-Mittel für den Anschluss an das Kommunikationsnetzwerk (300) und zum Empfangen der eindeutigen Identifikationsinformationen von der Kommunikationsvorrichtung (200); und
Konfigurationsverarbeitungsmittel, die auf die eindeutigen Identifikationsinformationen reagieren, um anfängliche Konfigurationsdaten für die Kommunikationsvorrichtung zu ermitteln;
wobei das E/A-Mittel so gestaltet ist, dass es die ermittelten Konfigurationsdaten über das Kommunikationsnetzwerk (300) zu der Kommunikationsvorrichtung (200) überträgt; und
**dadurch gekennzeichnet, dass** das Konfigurationsverarbeitungsmittel die Aufgabe hat, automatisch aktualisierte Konfigurationsdaten zu ermitteln und zu bewirken, dass das E/A-Mittel die aktualisierten Konfigurationsdaten zu der Kommunikationsvorrichtung (200) überträgt.

38. Konfigurationssystem nach Anspruch 37, wobei das Konfigurationsverarbeitungsmittel die Aufgabe hat, die Konfigurationsdaten mit den eindeutigen Identifikationsinformationen, Informationen über den oder die Benutzer der Kommunikationsvorrichtung und Informationen über den von dem/den Benutzer(n) benötigten Service-Level zu ermitteln.

39. Konfigurationssystem nach Anspruch 38 mit Beschaffungsmitteln, um die genannten Informationen über den/die Benutzer und die Informationen über das von dem/den Benutzer(n) benötigten Service-Level zu beschaffen.

40. Konfigurationssystem nach Anspruch 39, wobei das Beschaffungsmittel so gestaltet ist, dass es die Informationen über den/die Benutzer, die Informationen über das von dem/den Benutzer(n) benötigten Service-Level und erwartete eindeutige Identifikationsinformationen vor dem Empfang der eindeutigen Identifikationsinformationen durch das E/A-Mittel erhält, und das Konfigurationsverarbeitungsmittel die Aufgabe hat, die Konfigurationsdaten vor dem Empfang der eindeutigen Identifikationsinformationen anhand der Informationen zu ermitteln, die von dem Beschaffungsmittel beschafft wurden, um die empfangenen eindeutigen Identifikationsinformationen mit der erwarteten eindeutigen Identifikation zu vergleichen und zu bewirken, dass das E/A-Mittel die Konfigurationsdaten überträgt, wenn eine Übereinstimmung in dem Vergleich vorliegt.

41. Konfigurationssystem nach Anspruch 40 mit Mitteln zum Speichern einer Mehrzahl von Sätzen der Konfigurationsdaten für eine entsprechende Mehrzahl der erwarteten eindeutigen Identifikationsinformationen für eine entsprechende Mehrzahl der Kommunikationsvorrichtungen, wobei das Konfigurationssystem (500) für den Anschluss an eine Mehrzahl der Kommunikationsvorrichtungen (200) geeignet ist.

42. Konfigurationssystem nach einem der Ansprüche 37 bis 41, wobei das Konfigurationsverarbeitungsmittel auf eine Anforderung von Konfigurationsdaten reagiert, die von dem E/A-Mittel von der Kommunikationsvorrichtung (200) empfangen wurden, um Konfigurationsdaten zu ermitteln und das E/A-Mittel zum Übertragen der ermittelten Konfigurationsdaten zu steuern.

43. Konfigurationssystem nach einem der Ansprüche 37 bis 42 mit Decodiermitteln zum Decodieren von codierten eindeutigen Identifikationsinformationen, die von der Kommunikationsvorrichtung (200) empfangen wurden.

44. Konfigurationssystem nach einem der Ansprüche 41 bis 43 mit Codiermitteln zum Codieren der Konfigurationsdaten für die Übertragung zu der Kommunikationsvorrichtung (200).

## Revendications

1. Procédé de configuration à distance d'un appareil de communication (100) pour une communication sur un réseau (300) pour accéder à un service, le procédé comprenant les étapes de:
connexion dudit appareil de communication (100) audit réseau (300),
ledit appareil de communication (100) communiquant de manière automatique avec un système de configuration à distance (500) sur ledit réseau (300) en utilisant des données de configuration initiales;
ledit appareil de communication (100) transmettant une information d'identification unique audit système de configuration (500);
au niveau dudit système de configuration (500), détermination de données de configuration pour ledit appareil de communication (100);
transmission desdites données de configuration audit appareil de communication (100);
stockage desdites données de configuration qui sont reçues depuis ledit système de configuration (500) dans un moyen de stockage (22) dans ledit appareil de communication (100);
commande de communications qui suivent au moyen dudit appareil de communication (100) sur ledit réseau (300) en utilisant les données de configuration stockées,
**caractérisé par**:
la transmission de données de configuration qui suivent audit appareil de communication (100) de manière automatique depuis ledit système de configuration (500);
le stockage desdites données de configuration qui suivent dans ledit moyen de stockage (22); et
la commande desdites communications qui suivent au moyen dudit appareil de communication (100) sur ledit réseau (300) conformément aux données de configuration qui suivent stockées.

2. Procédé selon la revendication 1, incluant les étapes constituées par le fait qu'un utilisateur dudit appareil de communication (100) génère une requête pour des données de configuration qui suivent supplémentaires et transmet ladite requête audit système de configuration (500) pour initier la transmission de données de configuration qui suivent.

3. Procédé selon la revendication 1 ou 2, dans lequel lesdites données de configuration sont transmises sur ledit réseau (300) en utilisant un canal de commande ouvert en permanence qui est associé à une pluralité de canaux de données/vocaux.

4. Procédé selon l'une quelconque des revendications 1 à 3, incluant les étapes, au niveau dudit appareil de communication (100), de:
collecte d'une information concernant l'utilisation dudit service;
traitement de ladite information pour générer une information de résumé; et
transmission de façon périodique de ladite information de résumé à un fournisseur dudit service.

5. Procédé selon la revendication 4, dans lequel ladite information est collectée en temps réel en utilisant une horloge temps réel (20).

6. Procédé selon la revendication 4 ou 5, incluant l'étape d'application de ladite information et/ou de ladite information de résumé sur un utilisateur.

7. Appareil de communication (200) pour une utilisation selon le procédé de la revendication 1 pour réaliser un interfaçage d'un système d'ordinateur (100) sur un réseau de communication (300) pour accéder à un service, l'appareil (200) comprenant:
un premier moyen I/O (25) pour une connexion sur ledit système d'ordinateur;
un second moyen I/O (29) pour une connexion sur le réseau de communication;
un moyen de stockage (22) pour stocker une information d'identification unique et des données de configuration pour configurer le fonctionnement de l'appareil pour accéder audit service sur ledit réseau de communication (300);
un moyen de traitement (21) pour commander ledit second moyen I/O (29) lorsque ledit second moyen I/O (29) est connecté audit réseau de communication (300) pour une connexion sur un système de configuration à distance (500) et pour transmettre ladite information d'identification unique dans ledit moyen de stockage (22) au système de configuration (500),
dans lequel ledit moyen de traitement (21) peut fonctionner pour commander ledit second moyen I/O (29) pour recevoir des données de configuration initiales depuis ledit système de configuration (500), pour stocker lesdites données de configuration initiales reçues dans ledit moyen de stockage (22) et pour commander un accès audit service par ledit système d'ordinateur (100) conformément auxdites données de configuration initiales reçues; et
dans lequel ledit moyen de traitement (21) peut fonctionner pour commander ledit second moyen I/O (29) pour recevoir des données de configuration qui suivent qui sont générées de façon automatique par ledit système de configuration (500), pour stocker lesdites données de configuration qui suivent dans ledit moyen de stockage (22) et pour commander un accès qui suit audit service par ledit système d'ordinateur (100) conformément auxdites données de configuration qui suivent.

8. Appareil de communication selon la revendication 7, dans lequel ledit premier moyen I/O (25) comprend un port de réseau local pour une connexion sur un réseau local.

9. Appareil de communication selon la revendication 7 ou 8, dans lequel ledit second moyen I/O (29) comprend un port ISDN pour une connexion sur une ou plusieurs lignes ISDN dans ledit réseau de communication (300).

10. Appareil de communication selon la revendication 9, dans lequel ledit second moyen I/O (29) est adapté pour une connexion sur une ligne ISDN qui comporte un canal de données (D) et une pluralité de canaux de support (B).

11. Appareil de communication selon la revendication 9 ou 10, incluant au moins une interface (27a, 27b) de service de téléphone classique (POTS) pour connecter un téléphone (28a, 28b) à la ligne ISDN ou à chaque ligne ISDN.

12. Appareil de communication selon l'une quelconque des revendications 7 à 11, incluant un moyen d'interface utilisateur (31) pour permettre à un utilisateur de générer une requête pour des données de configuration qui suivent supplémentaires, ledit moyen de traitement (21) étant sensible à ladite requête pour commander ledit second moyen I/O (29) pour transmettre ladite requête audit système de configuration (500) pour faire en sorte que des données de configuration qui suivent supplémentaires soient transmises audit appareil (200).

13. Appareil de communication selon l'une quelconque des revendications 7 à 12, dans lequel ledit second moyen I/O (29) comprend une interface ISDN pour une connexion sur une ou plusieurs lignes ISDN d'un réseau ISDN qui comporte un ou plusieurs canaux de données qui connectent en permanence ladite interface ISDN au réseau ISDN, et pour recevoir lesdites données de configuration qui suivent en utilisant ledit canal de données.

14. Appareil de communication selon la revendication 13, dans lequel ladite interface ISDN est adaptée pour recevoir lesdites données de configuration qui suivent en utilisant un ou plusieurs canaux de communication de la ligne ISDN ou de chaque ligne ISDN.

15. Appareil de communication selon la revendication 7 ou 8, dans lequel ledit second moyen I/O (29) est adapté pour une connexion sur une ligne de communication de données dédiée.

16. Appareil de communication selon l'une quelconque des revendications 7 à 15, dans lequel ledit moyen de traitement (21) peut fonctionner pour collecter une information concernant l'utilisation dudit service par ledit système d'ordinateur (100), pour traiter ladite information afin de générer une information de résumé et pour commander ledit second moyen I/O (29) afin de transmettre de façon périodique ladite information de résumé à un fournisseur dudit service.

17. Appareil de communication selon la revendication 16, incluant un moyen d'horloge temps réel (20), dans lequel ledit moyen de traitement (21) peut fonctionner pour utiliser ledit moyen d'horloge temps réel (20) pour collecter une information temps réel concernant l'utilisation dudit service par ledit système d'ordinateur (100).

18. Appareil de communication selon la revendication 16 ou 17, incluant un moyen d'interface utilisateur (31) pour permettre à un utilisateur dudit appareil de communication (200) d'accéder à ladite information.

19. Appareil de communication selon la revendication 18, dans lequel ledit moyen d'interface utilisateur (31) comprend un moyen I/O supplémentaire (26).

20. Appareil de communication selon la revendication 18, dans lequel ledit moyen d'interface utilisateur (31) comprend un programme d'ordinateur qui est déroulé sur ledit moyen de traitement (21) pour permettre à un utilisateur dudit système d'ordinateur (100) d'accéder à ladite information de résumé via ledit premier moyen I/O (25).

21. Appareil de communication selon la revendication 20, dans lequel ledit moyen d'interface utilisateur (31) comprend ledit moyen de processeur (21) qui fonctionne en tant que serveur web.

22. Appareil de communication selon la revendication 21, dans lequel ledit moyen de traitement (21) peut fonctionner pour collecter et traiter ladite information en utilisant des instructions indépendantes de la machine pour une émission en sortie sur ledit utilisateur.

23. Appareil de communication selon l'une quelconque des revendications 7 à 22, incluant un moyen de codage pour coder ladite information d'identification unique avant transmission par ledit second moyen I/O.

24. Appareil de communication selon l'une quelconque des revendications 7 à 23, incluant un moyen de décodage pour décoder lesdites données de configuration initiales et lesdites données de configuration qui suivent qui sont reçues sous forme codée par ledit second moyen I/O.

25. Appareil de communication selon la revendication 7 ou 8, dans lequel ledit second moyen I/O (29) inclut un modem pour une connexion sur une ligne de téléphone analogique.

26. Appareil de communication (100, 200) pour une utilisation selon le procédé de la revendication 1 pour communiquer avec un système à distance (400) sur un réseau (300) pour accéder à un service, l'appareil comprenant:
un moyen I/O (29) pour une connexion sur le réseau (300);
un moyen de stockage (22) pour stocker une information d'identification unique et des données de configuration pour le fonctionnement de l'appareil de communication pour accéder audit service;
un moyen de traitement (21) pour commander ledit moyen I/O (29) lorsque ledit moyen I/O (29) est connecté audit réseau (300) afin de réaliser une connexion sur un système de configuration à distance (500) une première fois et afin de transmettre dessus ladite information d'identification unique,
dans lequel ledit moyen de traitement (21) peut fonctionner pour commander ledit moyen I/O (29) pour recevoir des données de configuration initiales depuis ledit système de configuration (500), pour stocker lesdites données de configuration initiales reçues dans ledit moyen de stockage (22) et pour commander un accès audit service conformément auxdites données de configuration initiales reçues; et
**caractérisé en ce que** ledit moyen de traitement (21) peut fonctionner pour commander ledit moyen I/O (29) pour recevoir des données de configuration qui suivent qui sont générées de manière automatique par ledit système de configuration (500), pour stocker lesdites données de configuration qui suivent dans ledit moyen de stockage (22) et pour commander un accès qui suit audit service conformément auxdites données de configuration qui suivent.

27. Appareil de communication selon la revendication 26, incluant un moyen d'interface utilisateur (25) pour permettre à un utilisateur de générer une requête pour des données de configuration qui suivent supplémentaires, ledit moyen de traitement (21) étant sensible à ladite requête pour commander ledit moyen I/O (29) pour transmettre ladite requête audit système de configuration (500) pour faire en sorte que des données de configuration qui suivent supplémentaires soient transmises audit appareil (100, 200).

28. Appareil de communication selon la revendication 26, dans lequel ledit moyen I/O (29) comprend une interface ISDN pour une connexion sur une ou plusieurs lignes ISDN d'un réseau ISDN comportant un ou plusieurs canaux de données qui connectent de façon permanente ladite interface ISDN au réseau ISDN et pour recevoir lesdites données de configuration qui suivent en utilisant ledit canal de données.

29. Appareil de communication selon la revendication 28, dans lequel ladite interface ISDN est adaptée pour recevoir lesdites données de configuration qui suivent en utilisant un ou plusieurs canaux de communication de la ligne ISDN ou de chaque ligne ISDN.

30. Appareil de communication selon l'une quelconque des revendications 26 à 29, dans lequel ledit moyen de traitement (21) peut fonctionner pour collecter l'information concernant l'utilisation dudit service, pour traiter ladite information afin de générer une information de résumé et pour commander ledit moyen I/O (29) pour transmettre de façon périodique ladite information de résumé à un fournisseur dudit service.

31. Appareil de communication selon la revendication 30, incluant un moyen d'horloge temps réel (20), dans lequel ledit moyen de traitement (21) peut fonctionner pour utiliser ledit moyen d'horloge temps réel (20) pour collecter une information temps réel concernant l'utilisation dudit service.

32. Appareil de communication selon la revendication 30 ou 31, incluant un moyen d'interface utilisateur pour permettre qu'un utilisateur dudit appareil accède à ladite information.

33. Appareil selon la revendication 32, dans lequel ledit moyen d'interface utilisateur comprend un programme d'ordinateur qui est déroulé sur ledit moyen de traitement (21) pour permettre un accès à ladite information de résumé.

34. Appareil selon la revendication 33, dans lequel ledit moyen de traitement (21) peut fonctionner pour collecter et traiter ladite information en utilisant des instructions indépendantes de la machine pour une émission en sortie sur ledit utilisateur.

35. Appareil selon l'une quelconque des revendications 26 à 34, incluant un moyen de codage pour coder ladite information d'identification unique avant transmission par ledit moyen I/O (29).

36. Appareil selon l'une quelconque des revendications 26 à 35, incluant un moyen de décodage pour décoder une configuration qui est reçue sous forme codée par ledit moyen I/O (29).

37. Système de configuration (500) pour une utilisation selon le procédé selon la revendication 1 et pour une connexion sur ledit appareil de communication (200) selon l'une quelconque des revendications 7 à 36 via un réseau de communication (300), ledit système de configuration (500) comprenant:
un moyen I/O pour une connexion sur ledit réseau de communication (300) et pour recevoir ladite information d'identification unique en provenance dudit appareil de communication (200); et
un moyen de traitement de configuration sensible à ladite information d'identification unique pour déterminer des données de configuration initiales pour ledit appareil de communication,
dans lequel ledit moyen I/O est adapté pour transmettre lesdites données de configuration déterminées sur ledit appareil de communication (200) sur ledit réseau de communication (300); et
**caractérisé en ce que** ledit moyen de traitement de configuration fonctionne pour déterminer de façon automatique des données de configuration mises à jour et pour faire en sorte que ledit moyen I/O transmette lesdites données de configuration mises à jour audit appareil de communication (200).

38. Système de configuration selon la revendication 37, dans lequel ledit moyen de traitement de configuration fonctionne pour déterminer lesdites données de configuration en utilisant ladite information d'identification unique, une information concernant l'utilisateur ou les utilisateurs dudit appareil de communication et une information concernant le niveau de service requis pour l'utilisateur ou les utilisateurs.

39. Système de configuration selon la revendication 38, incluant un moyen d'obtention pour obtenir ladite information concernant l'utilisateur ou les utilisateurs, et ladite information concernant le niveau de service requis par l'utilisateur ou les utilisateurs.

40. Système de configuration selon la revendication 39, dans lequel ledit moyen d'obtention est adapté pour obtenir ladite information concernant l'utilisateur ou les utilisateurs, ladite information concernant le niveau de service requis par l'utilisateur ou les utilisateurs et une information d'identification unique attendue avant réception de ladite information d'identification unique par ledit moyen I/O, et ledit moyen de traitement de configuration fonctionne pour déterminer lesdites données de configuration avant réception de ladite information d'identification unique en utilisant l'information qui est obtenue par ledit moyen d'obtention, pour comparer l'information d'identification unique reçue à ladite information d'identification unique attendue et pour faire en sorte que ledit moyen I/O transmette les données de configuration s'il y a une correspondance à l'issue de la comparaison.

41. Système de configuration selon la revendication 40, incluant un moyen pour stocker une pluralité de jeux desdites données de configuration pour une pluralité correspondante de ladite information d'identification unique attendue pour une pluralité correspondante desdits appareils de communication, dans lequel ledit système de configuration (500) est susceptible de réaliser une connexion sur une pluralité desdits appareils de communication (200).

42. Système de configuration selon l'une quelconque des revendications 37 à 41, dans lequel ledit moyen de traitement de configuration est sensible à une requête pour des données de configuration comme reçu par ledit moyen I/O depuis ledit appareil de communication (200) pour déterminer des données de configuration et pour commander ledit moyen I/O pour transmettre lesdites données de configuration déterminées.

43. Système de configuration selon l'une quelconque des revendications 37 à 42, incluant un moyen de décodage pour décoder une information d'identification unique codée qui est reçue depuis ledit appareil de communication (200).

44. Système de configuration selon l'une quelconque des revendications 41 à 43, incluant un moyen de codage pour coder lesdites données de configuration pour une transmission sur ledit appareil de communication (200).
